Europäisches Patentamt

European Patent Office

Office européen des brevets

(19)

(11) Veröffentlichungsnummer : **0 391 251 B1**

(12) **EUROPÄISCHE PATENTSCHRIFT**

(45) Veröffentlichungstag der Patentschrift :
16.12.92 Patentblatt 92/51

(51) Int. Cl.$^5$ : **C09K 7/06**

(21) Anmeldenummer : **90105991.5**

(22) Anmeldetag : **29.03.90**

(54) **Verwendung ausgewählter Ether monofunktioneller Alkohole in Bohrspülungen.**

Verbunden mit 90904837.3/0466724 (europäische Anmeldenummer/Veröffentlichungsnummer) durch Entscheidung vom 13.05.92.

(30) Priorität : **07.04.89 DE 3911299**

(43) Veröffentlichungstag der Anmeldung :
**10.10.90 Patentblatt 90/41**

(45) Bekanntmachung des Hinweises auf die Patenterteilung :
**16.12.92 Patentblatt 92/51**

(84) Benannte Vertragsstaaten :
**AT BE CH DE DK ES FR GB GR IT LI LU NL SE**

(56) Entgegenhaltungen :
EP-A- 0 183 050
WO-A-87/03613

(56) Entgegenhaltungen :
DE-B- 1 218 096
DE-B- 1 218 645
FR-A- 1 297 556
US-A- 3 630 898

(73) Patentinhaber : **Henkel Kommanditgesellschaft auf Aktien
Henkelstrasse 67
W-4000 Düsseldorf 13 (DE)**

(72) Erfinder : **Müller, Heinz
Goldregenweg 4
W-4019 Monheim (DE)**
Erfinder : **Stoll, Gerhard, Dr.
Danziger Strasse 69
W-4052 Korschenbroich 1 (DE)**
Erfinder : **Herold, Claus-Peter, Dr.
Ostpreussenstrasse 26
W-4020 Mettmann (DE)**
Erfinder : **von Tapavicza, Stephan, Dr.
Thomas-Mann-Strasse 12
W-4006 Erkrath 2 (DE)**

EP 0 391 251 B1

## Beschreibung

Die Erfindung beschreibt neue Bohrspülflüssigkeiten und darauf aufgebaute Invert-Bohrspülschlämme, die sich durch hohe ökologische Verträglichkeit bei gleichzeitig guten Stand- und Gebrauchseigenschaften auszeichnen. Ein wichtiges Einsatzgebiet für die neuen Bohrspülsysteme sind off-shore-Bohrungen zur Erschließung von Erdöl- und/oder Erdgasvorkommen, wobei es hier die Erfindung insbesondere darauf abstellt, technisch brauchbare Bohrspülungen mit hoher ökologischer Verträglichkeit zur Verfügung zu stellen. Der Einsatz der neuen Bohrspülsysteme hat besondere Bedeutung im marinen Bereich, ist aber nicht darauf eingeschränkt. Die neuen Spülsysteme können ganz allgemeine Verwendung auch bei landgestützten Bohrungen finden, beispielsweise beim Geothermiebohren, beim Wasserbohren, bei der Durchführung geowissenschaftlicher Bohrungen und bei Bohrungen im Bergbaubereich. Grundsätzlich gilt auch hier, daß durch die erfindungsgemäß ausgewählten Bohrölflüssigkeiten der ökotoxische Problembereich substantiell vereinfacht wird.

Zum Stand der Technik

Bohrspülungen auf Ölbasis werden im allgemeinen als sogenannte Invert-Emulsionsschlämme eingesetzt, die aus einem Dreiphasensystem bestehen: Öl, Wasser und feinteilige Feststoffe. Es handelt sich dabei um Zubereitungen vom Typ der W/O-Emulsionen, d. h. die wäßrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorsysteme, Beschwerungsmittel, fluid-loss-Additive, Alkalireserven, Viskositätsregler und dergleichen. Zu Einzelheiten wird beispielsweise verwiesen auf die Veröffentlichung P. A. Boyd et al. "New Base Oil Used in Low-Toxicity Oil Muds" Journal of Petroleum Technology, 1985, 137 bis 142 sowie R. B. Bennett "New Drilling Fluid Technology - Mineral Oil Mud" Journal of Petroleum Technology, 1984, 975 bis 981 sowie die darin zitierte Literatur.

Die einschlägige Technologie hat seit einiger Zeit die Bedeutung von Ölphasen auf Esterbasis zur Minderung der durch solche Ölspülungen ausgelösten Problematik erkannt. So beschreiben die US-Patentschriften 4,374,737 und 4,481,121 ölbasierte Bohrspülflüssigkeiten, in denen nonpolluting oils Verwendung finden sollen. Als nonpolluting oils werden nebeneinander und gleichwertig aromatenfreie Mineralölfraktionen und Pflanzenöle von der Art Erdnußöl, Sojabohnenöl, Leinsamenöl, Maisöl, Reisöl oder auch Öle tierischen Ursprungs wie Walöl genannt. Durchweg handelt es sich bei den hier genannten Esterölen pflanzlichen und tierischen Ursprungs um Triglyceride natürlicher Fettsäuren, die bekanntlich eine hohe Umweltverträglichkeit besitzen und gegenüber Kohlenwasserstofffraktionen - auch wenn diese aromatenfrei sind - aus ökologischen Überlegungen deutliche Überlegenheit besitzen.

Interessanterweise schildert dann aber kein Beispiel der genannten US-Patentschriften die Verwendung solcher natürlicher Esteröle in Invert-Bohrspülungen der hier betroffenen Art. Durchweg werden Mineralölfraktionen als geschlossene Ölphase eingesetzt. Öle pflanzlichen und/oder tierischen Ursprungs kommen aus praktischen Gründen nicht in Betracht. Die rheologischen Eigenschaften solcher Ölphasen sind für den breiten in der Praxis geforderten Temperaturbereich von 0 bis 5 °C einerseits sowie bis zu 250 °C und darüber andererseits nicht in den Griff zu bekommen.

Die älteren Vorschläge der Anmelderin

Esteröle der hier betroffenen Art verhalten sich tatsächlich im Einsatz nicht gleich wie die bisher verwendeten Mineralölfraktionen auf reiner Kohlenwasserstoffbasis. Esteröle unterliegen im praktischen Einsatz auch und gerade in W/O-Invert-Bohrspülschlämmen einer partiellen Hydrolyse. Hierdurch werden freie Carbonsäuren gebildet. Die älteren Anmeldungen P 38 42 659.5 und P 38 42 703.6 (D 8523 sowie D 8524) beschreiben die dadurch ausgelösten Probleme und geben Vorschläge zu ihrer Lösung. Weitere Abwandlungen brauchbarer Esteröle sind in den älteren Patentanmeldungen P 39 07 391.2 und P 39 07 392.0 (D 8606 und D 8607) beschrieben.

Gegenstand dieser älteren Anmeldungen ist die Verwendung von Esterölen auf Basis jeweils ausgewählter Monocarbonsäuren bzw. Monocarbonsäuregemische und monofunktioneller und gegebenenfalls mehrfunktioneller Alkohole. Die älteren Anmeldungen schildern, daß mit den dort offenbarten Estern bzw. Estergemischen nicht nur in der frischen Bohrspülung befriedigende rheologische Eigenschaften eingestellt werden können, sondern daß es auch gelingt, unter Mitverwendung ausgewählter bekannter Alkalireserven in der Bohrspülung zu arbeiten und auf diese Weise unerwünschte Korrosion zurückzuhalten. Als Alkalireserve wird - insbesondere beim Einsatz von Esterölen auf Basis von Carbonsäuren mit wenigstens 6 C-Atomen - der Zusatz von Kalk (Calciumhydroxid bzw. lime) und/oder die Mitverwendung von Zinkoxid oder vergleichbaren Zinkverbindungen vorgesehen. Dabei ist allerdings eine zusätzliche Einschränkung zweckmäßig. Soll im praktischen Betrieb die unerwünschte Eindickung des ölbasischen Invert-Spülsystems verhindert werden, so ist die Menge des alkalisierenden Zusatzstoffes und insbesondere die Kalkmenge zu begrenzen. Der vorgesehene Höchstbetrag ist nach der Offenbarung der genannten älteren Anmeldungen bei etwa 0,907 kg/bbl (2 lb/bbl) Ölspülung angesetzt.

Eine wichtige Weiterentwicklung solcher Invert-Bohrspülungen auf Esterölbasis ist Gegenstand der älteren Anmeldung P 39 03 785.1 (D 8543) der Anmelderin.

Die Lehre dieser älteren Anmeldung geht von dem Konzept aus, in Invert-Bohrspülungen auf Basis von Esterölen ein zusätzliches Additiv mitzuverwenden, das geeignet ist, die erwünschten rheologischen Daten der Bohrspülung im geforderten Bereich auch dann zu halten, wenn im Gebrauch zunehmend größere Mengen an freien Carbonsäuren durch partielle Esterhydrolyse gebildet werden. Diese freiwerdenden Carbonsäuren sollen nicht nur in einer unschädlichen Form abgefangen werden, es soll darüber hinaus möglich sein, diese freien Carbonsäuren gewünschtenfalls zu wertvollen Komponenten mit stabilisierenden bzw. emulgierenden Eigenschaften für das Gesamtsystem umzuwandeln. Vorgesehen ist nach dieser Lehre die Mitverwendung von basischen und zur Salzbildung mit Carbonsäuren befähigten Aminverbindungen ausgeprägt oleophiler Natur und höchstens beschränkter Wasserlöslichkeit als Additiv in der Ölphase. Die oleophilen Aminverbindungen können gleichzeitig wenigstens anteilsweise als Alkalireserve der Invert-Bohrspülung Verwendung finden, sie können aber auch in Kombination mit konventionellen Alkalireserven, insbesondere zusammen mit Kalk eingesetzt werden. Bevorzugt ist die Verwendung von oleophilen Aminverbindungen, die wenigstens überwiegend frei sind von aromatischen Bestandteilen. In Betracht kommen insbesondere gegebenenfalls olefinisch ungesättigte aliphatische, cycloaliphatische und/oder heterocyclische oleophile basische Aminverbindungen, die eine oder auch mehrere mit Carbonsäuren zur Salzbildung befähigte N-Gruppierungen enthalten. Die Wasserlöslichkeit bei Raumtemperatur dieser Aminverbindungen beträgt in einer bevorzugten Ausführungsform höchstens etwa 5 Gew.-% und liegt zweckmäßigerweise unter 1 Gew.-%.

Typische Beispiele für solche Aminverbindungen sind wenigstens weitgehend wasserunlösliche primäre, sekundäre und/oder tertiäre Amine, die auch beschränkt alkoxyliert und/oder mit insbesondere Hydroxylgruppen substituiert sein können. Weitere Beispiele sind entsprechende Aminoamide und/oder Stickstoff als Ringbestandteil enthaltende Heterocyclen. Geeignet sind beispielsweise basische Aminverbindungen, die wenigstens einen langkettigen Kohlenwasserstoffrest mit bevorzugt 8 bis 36 C-Atomen, insbesondere mit 10 bis 24 C-Atomen aufweisen, der auch 1- oder mehrfach olefinisch ungesättigt sein kann. Die oleophilen basischen Aminverbindungen können der Bohrspülung in Mengen bis zu etwa 4,53 kg/bbl (10 lb/bbl,) vorzugsweise in Mengen bis zu etwa 2,27 kg/bbl (5 lb/bbl) und insbesondere im Bereich von etwa 0,045 bis 0,906 kg/bbl (0,1 bis 2 lb/bbl) zugesetzt werden.

Es hat sich gezeigt, daß die Mitverwendung solcher oleophiler basischer Aminverbindungen Verdickungen des Spülsystems wirkungsvoll verhindern kann, die vermutlich auf einer Störung des W/O-Invertsystems beruhen und auf die Entstehung freier Carbonsäuren durch Esterhydrolyse zurückzuführen sind.

Die Aufgabe der Erfindung und ihre technische Lösung

Die vorliegende Erfindung geht von der Aufgabe aus, Systeme der betroffenen Art und insbesondere Bohrspülungen hoher ökologischer Verträglichkeit weiterzuentwickeln. In einer ersten Ausführungsform will die Erfindung Öle bzw. Ölgemische zum Aufbau von Bohrspülungen auf Basis von W/O-Emulsionen zur Verfügung stellen, die technisch brauchbar und leicht zugänglich sind und sich gleichzeitig durch eine hohe ökolgische Wertigkeit auszeichnen. In einer weiteren Ausführungsform will die Erfindung Additive für vorbeschriebene Systeme der hier betroffenen Art zugänglich machen, die Bohrspülungen auf W/O-Emulsionsbasis wertvolle Zusatzeigenschaften verleihen, ohne deren ökolgische Verträglichkeit nachteilig zu beeinträchtigen.

Die technische Lösung der erfindungsgemäßen Aufgaben geht von der Erkenntnis aus, daß ausgewählte und dem jeweiligen Einsatzzweck angepaßte Ether zu neuen und verbesserten Bohrspülungen der angegebenen Art führen können. Bei diesen Ethern handelt es sich um wasserunlösliche oder im wesentlichen wasserunlösliche Komponenten, insbesondere also um entsprechende Verbindungen mit ausgeprägt oleophilem Charakter, die sich jedoch von den reinen Kohlenwasserstoffverbindungen durch das Vorliegen der funktionellen Ethergruppe unterscheiden. Hierdurch werden wichtige technologische Verbesserungen zugänglich, gleichzeitig ist die hohe ökologische Verträglichkeit sichergestellt.

Gegenstand der Erfindung ist dementsprechend in einer ersten Ausführungsform die Verwendung von wasserunlöslichen und Flammpunkte oberhalb 80 °C aufweisenden Ethern einwertiger Alkohole natürlichen und/oder synthetischen Ursprungs mit wenigstens 4 C-Atomen, vorzugsweise wenigstens 6 C-Atomen in den Alkoholresten als Ölphase oder Bestandteil der Ölphase von Invert-Bohrspülungen, die als W/O-Emulsionen vorliegen, in der geschlossenen und im Temperaturbereich von 0 bis 5 °C fließ- und pumpfähigen Ölphase eine disperse wäßrige Phase sowie gewünschtenfalls weitere übliche Zusastzstoffe aufweisen und für die umweltschonende Erschließung von beispielsweise Erdöl- bzw. Erdgasvorkommen geeignet sind.

In einer weiteren Ausführungsform betrifft die Erfindung Invert-Bohrspülungen der geschilderten Art, die dadurch gekennzeichnet sind, daß sie als geschlossene Ölphase oder gelöst in ökologisch verträglichen Ölen einen Zusatz von wenigstens weitgehend wasserunlöslichen Ethern einwertiger Alkohole enthalten, wobei die jeweilige Ölphase im Temperaturbereich von 0 bis 5 °C fließ- und pumpfähig ist und Flammpunkte oberhalb 80 °C aufweist.

Die verschiedenen Ausführungsformen der Erfindung

In einer ersten Ausführungsform wird die geschlossene Ölphase der Invert-Bohrspülungen ausschließlich oder weitaus überwiegend durch die im wesentlichen wasserunlöslichen und vorzugsweise ausgeprägt oleophilen Ether gebildet. Verständlicherweise muß hier die Rheologie der eingesetzten Ether den technischen Anforderungen der Bohrspülungen angepaßt sein. Leichte rheologische Korrekturen sind durch Mitverwendungen der in dieser Ausführungsform vorgesehenen geringen Mengen an Verdünnungsmittlen möglich. In Betracht kommen im hier geschilderten Fall insbesondere Ölphasen, die zu mehr als 70 Gew.-%, vorzugsweise zu mehr als 80 Gew.-% und gewünschtenfalls ausschließlich durch die Ether als solche gebildet wird. Zu den rheologischen Anforderungen solcher Öle für das Einsatzgebiet der Bohrspülflüssigkeiten gilt das allgemeine Fachwissen, auf das im nachfolgenden noch einmal eingegangen wird.

Unter die erfindungsgemäße Definition des Begriffes geeigneter Ether fallen ganz allgemein symmetrische, auf jeweils einen ausgewählten Alkohol zurückgehende Ether, Mischether unterschiedlicher Alkohole und/oder Ethergemische der beiden zuvor genannten Ethertypen. Aus dem breiten Bereich geeigneter individueller Ether bzw. Mischether und/oder Ethergemische kommen insbesondere entsprechende Vertreter in Betracht, die wenigstens anteilsweise entsprechende Derivate monofunktioneller Alkohole mit wenigstens 6 oder 7 C-Atomen, vorzugsweise mit wenigstens 8 C-Atomen sind, wobei die mögliche Obergrenze der C-Zahl durch die Struktur des Kohlenwasserstoffrestes stark beeinflußt wird. Der bekannte Einfluß verzweigtkettiger und-/oder ungesättigter Struktur der Kohlenwasserstoffreste in entsprechenden Alkoholen wirkt sich auch auf die Rheologie der daraus entstandenen Ether aus.

Die Rheologie verzweigtkettiger und/oder ungesättigter Ether der hier betroffenen Art erfüllt bekanntlich die Anforderungen an Fließ- und Pumpfähigkeit auch bei niederen Temperaturen leichter als das geradkettige gesättigte Kohlenwasserstoffgerüst. Gesättigte geradkettige Fettalkohol-Ether des Bereichs $C_{16/18}$ haben bekanntlich hohe Erstarrungsbereiche. Verzweigte Ether des gleichen C-Zahlbereichs können - in Abhängigkeit vom Ausmaß und Grad der Verzweigung - durchaus brauchbare fließ- und pumpfähige Ölphasen im Sinne der Erfindung darstellen. Geeignet ist auf dem Gebiet der gesättigten Ether aus monofunktionellen Alkoholen allerdings insbesondere der Bereich niedriger Kohlenstoffzahlen, insbesondere also der Bereich von etwa $C_{8-14}$, wobei auch hier den Ethern aus verzweigtkettigen Alkoholen rheologische Vorteile zukommen können.

Die in dieser Ausführungsform in geringen Mengen gegebenenfalls mitverwendeten Öl-Mischungskomponenten können reine, insbesondere aromatenfreie Kohlenwasserstoffverbindungen, insbesondere aber ausgewählte Esteröle der in den genannten älteren Anmeldungen der Anmelderin geschilderten Art sein.

Der Eigenrheologie der erfindungsgemäß eingesetzten Etherkomponenten kommt zunehmend geringere Bedeutung zu je größer in der Abmischung mit einer oder mehreren Ölkomponenten der Anteil dieser Mischungsbestandteile wird. Eine zweite Ausführungsform der Erfindung betrifft dementsprechend den Einsatz von Ölphasen in Systemen der betroffenen Art, die doch immerhin schon beträchtliche oder gar überwiegende Mengen an nichtwassermischbaren Ölen aufweisen, die in Abmischung mit den erfindungsgemäß vorgesehenen Ethern verwendet werden. Der Gehalt an erfindungsgemäß ausgewählten Ethern liegt in dieser Ausführungsform in der Regel oberhalb von 10 Gew.-% bis etwa 70 Gew.-% - jeweils bezogen auf die flüssige Ölphase - wobei Etheranteile in Mengen von wenigstens etwa 35 Gew.-% und vorzugsweise wenigstens etwa 50 Gew.-% der Ölphase bevorzugt sein können.

Als Mischungskomponenten für diese zweite Ausführungsform der Erfindung kommen wiederum sowohl reine insbesondere aromatenfreie Kohlenwasserstofföle als auch vor allem Esteröle der in den älteren Anmeldungen der Anmelderin geschilderten Art in Betracht. In den Rahmen der Erfindung fallen auch Abmischungen dieser Typen, wobei sowohl Abmischungen von Esterölen mit reinen Kohlenwasserstoffverbindungen als auch Mischungen verschiedener Esteröltypen Mischungskomponenten für den gemeinsamen Einsatz mit den oleophilen Ethern darstellen können. In bevorzugten Ausführungsformen der Erfindung werden die keinerlei funktionellen Gruppen aufweisenden reinen Kohlenwasserstofföle in der Ölphase in Mengen von höchstens 50 Gew.-%, vorzugsweise von höchstens etwa 35 Gew. -% und insbesondere in Mengen von höchstens etwa 25 Gew.-% - jeweils bezogen auf die Ölphase - eingesetzt. In den wichtigsten Ausführungsformen der hier be-

4

schriebenen Variante werden als Ölphase Mischungen aus den erfindungsgemäß definierten Ethern und Esterölen ohne Zusatz von reinen Kohlenwasserstoffverbindungen verwendet.

Die Erfindung betrifft schließlich in einer dritten Variante die Mitverwendung der praktisch wasserunlöslichen Ether als Additiv in der Ölphase vorbeschriebener Bohrspülungen auf Basis von W/O-Emulsionen. Die Menge der erfindungsgemäß eingesetzten Ether liegt hier üblicherweise im Bereich von etwa 0,1 bis maximal 10 Gew.-%, vorzugsweise im Bereich von etwa 1 bis 5 Gew.-% der Ölphase. Der Kreis an geeigneten wasserunlöslichen Ethern kann sich in dieser Ausführungsform begreiflicherweise substantiell erweitern. Die Rheologie des Gesamtsystems wird hier nicht mehr durch die rheologischen Werte des Ethers bestimmt. Gerade in dieser Ausführungsform der Verwendung der erfindungsgemäß definierten Ether als Additiv werden aber wichtige Verbesserungen im Verhalten von Bohrspülungen vorbeschriebener Art erreicht.

Insbesondere gilt das für Invert-Systeme, in denen die Hauptkomponente der geschlossene Ölphase ausschließlich oder überwiegend durch Esteröle der in den genannten älteren Anmeldungen der Anmelderin beschriebenen Art gebildet wird. In der hier betroffenen Ausführungsform liegen als Hauptkomponenten für die Ölphase dementsprechend mindestens 25 Gew.-%, vorzugsweise mindestens 50 Gew.-% und insbesondere wenigstens etwa 75 bis 80 Gew.-% der Ölphase als Esteröl vor. Zum Rest können reine Kohlenwasserstofföle des Standes der Technik mitverwendet werden, wobei aber zweckmäßigerweise darauf ganz verzichtet wird.

Durch den Zusatz der erfindungsgemäß definierten wasserunlöslichen Ether zu Invert-Systemen können wichtige Verbesserungen für den praktischen Einsatz der Bohrspülungen eingestellt werden. Betroffen sind insbesondere die folgenden vier Teilaspekte: Verringerung der fluid-loss-Werte, die Erleichterung und Verbesserung der Emulgierung der dispersen wäßrigen Phase, eine gegebenenfalls deutlich verbesserte Schmierwirkung der Bohrspülflüssigkeit sowie gegebenenfalls eine deutliche Verbesserung der rheologischen Eigenschaften von Invert-Bohrspülungen auf Esterölbasis.

Die erfindungsgemäß eingesetzten Ether

Die Verwendung der Ether als Ölphase aber auch ihre Mitverwendung als mengenmäßig untergeordneter oder übergeordneter Anteil in der Ölphase fordert die hinreichende Wasserunlöslichkeit dieser Ether. Bevorzugt liegt bei Raumtemperatur die Wasserlöslichkeit geeigneter Ether unter 5 Gew.-% insbesondere unter 1 Gew.-% und bevorzugt bei nicht mehr als etwa 0,1 Gew.-%.

Zur chemischen Beschaffenheit gelten die nachfolgenden allgemeinen Gesetzmäßigkeiten:

Die spezielle Struktur der im Rahmen des erfindungsgemäßen Handelns eingesetzten Ether wird vorangig durch die jeweils gewählte Ausführungsform bestimmt, in der die Zusammensetzung der etherhaltigen Ölphase gewählt ist, vergleiche hierzu das vorangegangene Unterkapitel.

Bilden die Ether die Ölphase ausschließlich oder liegen die Ether wenigstens als überwiegende Mischungskomponente im die geschlossene Ölphase bildenden Einsatzgemisch vor, dann wird die Auswahl der geeigneten Ether bzw. Ethergemische zunächst einmal durch die entsprechenden rheologischen Grunddaten bestimmt. Im einzelnen gilt hier, daß der Ether bzw. die eingesetzten Ethergemische im Temperaturbereich von 0 bis 5 °C eine Brookfield(RVT)-Viskosität nicht oberhalb 50 mPas, vorzugsweise nicht oberhalb 40 mPas und insbesondere höchstens von etwa 30 mPas aufweisen. Gleichzeitig sollten die Erstarrungswerte (Fließ- und Stockpunkt) des bzw. der Ether unterhalb 0 °C liegen. Vorzugsweise werden Ether bzw. Ethergemische mit Erstarrungswerten unterhalb - 5 °C und insbesondere unterhalb - 10 °C eingesetzt.

Wichtig sind schließlich für den praktischen Einsatz auch die Flammpunkte des bzw. der verwendeten Ether, die zweckmäßigerweise nicht unter 90 °C und vorzugsweise oberhalb 100 °C liegen. Deutlich höhere Flammpunkte, beispielsweise solche oberhalb 130 °C und insbesondere oberhalb 150 °C können besonders zweckmäßig sein.

Wie im vorangegangenen Unterkapitel bereits diskutiert, wird die Gesamtheit der rheologischen Eigenschaften und des Flammpunkts stark durch die individuelle Molekülstruktur der etherbildenden Alkohole bestimmt. Zu diesen Strukturmerkmalen sei hier noch das folgende gesagt:

Ein wichtiges Element der Erfindung ist der Einsatz vergleichsweise nicht-toxischer Komponenten, so daß also beispielsweise die Verwendung aromatischer Ether insbesondere des Phenolethertyps praktisch ausscheidet. Aliphatische, gegebenenfalls ein- und/oder mehrfach olefinisch ungesättigte Alkohole mit geradkettiger und/oder verzweigter Kohlenwasserstoffstruktur sowie gegebenenfalls cycloaliphatische Alkohole sind die wichtigsten etherbildenden Komponenten im Sinne des erfindungsgemäßen Handelns. Die Untergrenze der Kohlenstoffzahl solcher Alkohole liegt bei $C_4$, vorzugsweise bei $C_6$ und insbesondere bei $C_8$. Die Obergrenze der Kohlenstoffzahl in den etherbildenden Alkoholen kann je nach Rheologieanforderungen auch sehr hoch gewählt werden und liegt beispielsweise bei etwa $C_{36}$, vorzugsweise bei etwa $C_{32}$. In Betracht kommen insbesondere monofunktionelle Alkohole des Bereichs von etwa $C_{6-24}$, vorzugsweise $C_{6-18}$. Ether aus $C_{8-16}$ und

insbesondere $C_{8-14}$-Alkoholen sind geeignete Komponenten im Sinne der erfindungsgemäßen Lehre.

Die etherbildenden Alkohole können dabei jeweils ganz oder wenigstens anteilsweise geradkettig und/oder verzweigtkettig, geradzahlig und/oder ungeradzahlig, gesättigt und/oder ungesättigt sein. Die etherbildenden Alkohole können dabei wiederum ganz oder anteilsweise natürlichen und/oder synthetischen Ursprungs sein.

Geeignet sind im Rahmen der angegebenen Grenzbedingungen bestimmt ausgewählte Ether bzw. Ether aus bestimmt ausgewählten Alkoholen, Mischether bestimmt ausgewählter Alkohole und/oder Ethergemische. Da die Etherfunktion sowohl gegenüber den über die Bohrspülung eingebrachten Bestandteilen als auch gegenüber den im Betrieb der Bohrspülung auftretenden chemischen Einwirkungen wenigstens weitgehend inert ist - insbesondere gilt das auch gerade für die basisch eingestellten Invert-Emulsionen auf W/O-Basis - besteht hier praktisch Wahlfreiheit, so daß die in der Bohrspülung geforderten rheologischen Daten optimal eingestellt und erfüllt werden können. Sekundärreaktionen beim Betrieb, wie sie für die Esteröle in basisch eingestellten W/O-Invertemulsionen typisch sind, fallen für die Ether als Ölphase oder als Mischungskomponente der Ölphase nicht ernsthaft ins Gewicht.

Die Mischungskomponenten in der Ölphase

Zur Abmischung im Rahmen der Erfindung geeignete Ölkomponenten sind die in der heutigen Praxis der Bohrspülungen eingesetzten Mineralöle und dabei bevorzugt im wesentlichen aromatenfreie aliphatische und/ oder cycloaliphatische Kohlenwasserstofffraktionen der geforderten Fließeigenschaften. Auf den einschlägigen druckschriftlichen Stand der Technik und die auf dem Markt befindlichen Handelsprodukte wird verwiesen.

Besonders wichtige Mischungskomponenten sind allerdings im Sinne des erfindungsgemäßen Handelns umweltverträgliche Esteröle wie sie insbesondere in den genannten älteren Anmeldungen P 38 42 659.5, P 38 42 703.6, P 39 07 391.2 und P 39 07 392.0 (D 8523, D 8524, D 8606 und D 8607) geschildert sind. Zur Vervollständigung der Erfindungsoffenbarung werden im nachfolgenden wesentliche Kenndaten solcher Ester bzw. Estergemische kurz zusammengefaßt.

In einer ersten Ausführungsform werden im Temperaturbereich von 0 bis 5 °C fließ- und pumpfähige Ester aus monofunktionellen Alkoholen mit 2 bis 12, insbesondere mit 6 bis 12 C-Atomen und aliphatisch gesättigten Monocarbonsäuren mit 12 bis 16 C-Atomen oder deren Abmischung mit höchstens etwa gleichen Mengen anderer Monocarbonsäuren als Ölphase mitverwendet. Bevorzugt sind dabei Esteröle, die zu wenigstens etwa 60 Gew.-% - bezogen auf das jeweilige Carbonsäuregemisch - Ester aliphatischer $C_{12-14}$-Monocarbonsäuren sind und gewünschtenfalls zum Rest auf untergeordnete Mengen kürzerkettiger aliphatischer und/oder längerkettiger, dann insbesondere 1 - und/oder mehrfach olefinisch ungesättigter Monocarbonsäuren zurückgehen. Bevorzugt werden Ester eingesetzt, die im Temperaturbereich von 0 bis 5 °C eine Brookfield(RVT)-Viskosität im Bereich nicht oberhalb 50 mPas, vorzugsweise nicht oberhalb 40 mPas und insbesondere von höchstens etwa 30 mPas besitzen. Die im Bohrschlamm eingesetzten Ester zeigen Erstarrungswerte (Fließ- und Stockpunkt) unterhalb - 10 °C, vorzugsweise unterhalb - 15 °C und besitzen dabei insbesondere Flammpunkte oberhalb 100 °C, vorzugsweise oberhalb 150 °C. Die im Ester bzw. Estergemisch vorliegenden Carbonsäuren sind geradkettig und/oder verzweigt und dabei pflanzlichen und/oder synthetischen Ursprungs. Sie können sich von entsprechenden Triglyceriden wie Kokosöl, Palmkernöl und/oder Babassuöl ableiten. Die Alkoholreste der eingesetzten Ester leiten sich insbesondere von geradkettigen und/oder verzweigten gesättigten Alkoholen mit vorzugsweise 6 bis 10 C-Atomen ab. Auch diese Alkoholkomponenten können pflanzlichen und/oder tierischen Ursprungs und dabei durch reduktive Hydrierung entsprechender Carbonsäureester gewonnen worden sein.

Eine weitere Klasse besonders geeigneter Esteröle leitet sich von olefinisch 1- und/oder mehrfach ungesättigten Monocarbonsäuren mit 16 bis 24 C-Atomen oder deren Abmischungen mit untergeordneten Mengen anderer, insbesondere gesättigter Monocarbonsäuren und monofunktionellen Alkoholen mit bevorzugt 6 bis 12 C-Atomen ab. Auch diese Esteröle sind im Temperaturbereich von 0 bis 5 °C fließ- und pumpfähig. Geeignet sind insbesondere Ester dieser Art, die sich zu mehr als 70 Gew.-%, vorzugsweise zu mehr 80 Gew.-% und insbesondere zu mehr als 90 Gew.-% von olefinisch ungesättigten Carbonsäuren des Bereichs von $C_{16-24}$ ableiten.

Auch hier liegen die Erstarrungswerte (Fließ- und Stockpunkt) unterhalb - 10 °C, vorzugsweise unterhalb - 15 °C, während die Flammpunkte oberhalb 100 °C und vorzugsweise oberhalb 160 °C liegen. Die im Bohrschlamm eingesetzten Ester zeigen im Temperaturbereich von 0 bis 5 °C eine Brookfield(RVT)-Viskosität von nicht mehr als 55 mPas, vorzugsweise von nicht mehr als 45 mPas.

Bei Esterölen der hier betroffenen Art lassen sich zwei Unterklassen definieren. In der ersten leiten sich die im Ester vorliegenden ungesättigten $C_{16-24}$-Monocarbonsäurereste zu nicht mehr als 35 Gew.-% von 2- und mehrfach olefinisch ungesättigten Säuren ab, wobei bevorzugt wenigstens etwa 60 Gew.-% der Säurereste einfach olefinisch ungesättigt sind. In der zweiten Ausführungsform leiten sich die im Estergemisch vorliegen-

den $C_{16-24}$-Monocarbonsäuren zu mehr als 45 Gew.-%, vorzugsweise zu mehr als 55 Gew.-% von 2- und/oder mehrfach olefinisch ungesättigten Säuren ab. Im Estergemisch vorliegende gesättigte Carbonsäuren des Bereiches $C_{16/18}$ machen zweckmäßigerweise nicht mehr als etwa 20 Gew.-% und insbesondere nicht mehr als etwa 10 Gew.-% aus. Bevorzugt liegen gesättigte Carbonsäureester aber im Bereich niedrigerer C-Zahlen der Säurereste. Die vorliegenden Carbonsäurereste können pflanzlichen und/oder tierischen Ursprungs sein. Pflanzliche Ausgangsmaterialien sind beispielsweise Palmöl, Erdnußöl, Rizinusöl und insbesondere Rüböl. Carbonsäuren tierischen Ursprungs sind insbesondere entsprechende Gemische aus Fischölen wie Heringsöl.

Eine weitere interessante Klasse von Esterölen, die als Mischungskomponente im Rahmen des erfindungsgemäßen Handelns mitverwendet werden kann, sind bei Raumtemperatur fließfähige und Flammpunkte oberhalb 80 °C aufweisende Ester aus $C_{1-5}$-Monocarbonsäuren und ein- und/oder mehrfunktionellen Alkoholen, die bevorzugt auch im Temperaturbereich von 0 bis 5 °C fließ- und pumpfähig sind. Geeignet sind dabei insbesondere entsprechende Ester dieser niederen Carbonsäuren mit monofunktionellen Alkoholen mit wenigstens 8 C-Atomen und/oder Ester dieser Säuren mit 2- bis 4wertigen Alkoholen mit vorzugsweise 2 bis 6 C-Atomen. Als Ester-bildende Säurekomponente dieser Klasse eignet sich aus praktischen Gründen insbesondere die Essigsäure. Maßzahlen zur Rheologie und Flüchtigkeit bzw. den Erstarrungswerten bevorzugter Ester dieser Unterklasse entsprechen den zuvor genannten Werten.

Geeignet sind als Mischungskomponenten aus dieser Unterklasse insbesondere Ester von monofunktionellen Alkoholen natürlichen und/oder synthetischen Ursprungs, deren Kettenlänge beim Vorliegen überwiegend aliphatisch gesättigter Alkohole im Bereich von $C_{8-15}$, im Falle 1 - und mehrfach olefinisch ungesättigter Alkohole, aber auch bei höheren C-Zahlen, beispielsweise bis etwa $C_{24}$ liegen kann. Einzelheiten finden sich in der älteren Patentanmeldung P 39 07 391.2 (D 8606) der Anmelderin.

Geeignete Mischungskomponenten sind schließlich aber die in der parallelen Anmeldung P 39 07 392.0 (D8607) beschriebenen Ester aus Monocarbonsäuren synthetischen und/oder natürlichen Ursprungs mit 6 bis 11 C-Atomen und 1 - und/oder mehrfunktionellen Alkoholen, die bevorzugt auch im Temperaturbereich von 0 bis 5 °C fließ- und pumpfähig sind. Zur Vervollständigung der Erfindungsoffenbarung wird insoweit auf die genannte Parallelanmeldung verwiesen, deren Inhalt - ebenso wie der der zuvorgenannten Anmeldung - hiermit zum Gegenstand auch der vorliegenden Offenbarung gemacht wird.

Geeignete Mischungskomponenten auch für die Lehre der vorliegenden Erfindung sind schließlich wenigstens weitgehend wasserunlösliche Alkohole ausgeprägt oleophilen Charakters, wie sie als Ölphase oder wenigstens als Bestandteil der geschlossenen Ölphase solcher W/O-Invertemulsionen in der parallelen Anmeldung der Anmelderin ... (D 8511/8512) geschildert werden. Zum Zwecke der Erfindungsoffenbarung wird ausdrücklich auf die Angaben dieser parallelen Schutzrechtsanmeldung verwiesen.

In den Rahmen der Erfindung fallen Mehrstoffgemische, die zusammen mit den erfindungsgemäß definierten Ethern eine oder mehrere der hier im einzelnen aufgezählten Mischungskomponenten enthalten können. Dabei sind grundsätzlich beliebige Abmischungen verwendbar, soweit sie die rheologischen Grundforderungen für Invert-Bohrspülungen der hier betroffenen Art erfüllen. Als Beispiele für solche Mehrkomponentengemische seien Materialien auf Basis verschiedener Typen an Esterölen oder aber auch zusätzlich Mineralöl enthaltende Stoffmischungen genannt.

Weitere Mischungskomponenten der Invert-Bohrspülung

In Betracht kommen hier alle üblichen Mischungsbestandteile zur Konditionierung und für den praktischen Einsatz der Invert-Bohrspülschlämme, wie sie nach der heutigen Praxis mit Mineralölen als geschlossene Ölphase zur Verwendung kommen. Neben der dispersen wäßrigen Phase kommen hier insbesondere Emulgatoren, Beschwerungsmittel, fluid-loss-Additive, Viskositätsbildner und Alkalireserven in Betracht.

In einer wichtigen Ausführungsform werden zusammen mit Esterölen oleophile basische Aminverbindungen als Additiv eingesetzt, die im einzelnen in der eingangs genannten älteren Anmeldung P 39 03 785.1 (D 8543) der Anmelderin beschrieben sind. Zu Einzelheiten wird auf die eingangs geschilderte Offenbarung dieser älteren Anmeldung verwiesen.

Werden im Rahmen der Erfindung Esteröle als Mischungskomponenten mitverwendet - und hierbei insbesondere Esteröle auf Basis von Carbonsäuren mit wenigstens 6 C-Atomen - eingesetzt, kann es zweckmäßig sein, in der Ölspülung keine wesentlichen Mengen stark hydrophiler Basen anorganischer und/oder organischer Art mitzuverwenden. Kalk kann wirkungsvoll als Alkalireserve mitverwendet werden. Es ist dann allerdings zweckmäßig, die maximal einzusetzende Kalkmenge mit etwa 0,906 kg/bbl (2 lb/bbl) zu beschränken, wobei es bevorzugt sein kann, mit Bohrschlammbeladungen an Kalk zu arbeiten, die leicht darunter liegen, beispielsweise also im Bereich von etwa 0,453 bis 0,82 kg/bbl (1 bis 1,8 lb/bbl) (Kalk/Bohrspülung) liegen. Neben oder anstelle des Kalks können andere Alkalireserven bekannter Art zum Einsatz kommen. Genannt seien hier insbesondere die weniger basischen Metalloxide von der Art des Zinkoxids. Auch bei dem Einsatz solcher Säurefänger wird allerdings darauf geachtet werden, keine zu großen Mengen einzusetzen, um eine unerwünschte vorzeitige Alterung der Bohrspülung - verbunden mit einem Viskositätsanstieg und damit Verschlechterung der rheologischen Eigenschaften - zu verhindern. Durch die hier diskutierte Besonderheit des erfindungsgemäßen Handelns wird das Entstehen unerwünschter Mengen an hoch wirksamen O/W-Emulgatoren verhindert oder wenigstens so eingeschränkt, daß die guten rheologischen Einsatzwerte auch bei der thermischen Alterung im Betrieb für hinreichend lange Zeit aufrechterhalten bleiben.

Weiterhin gilt das folgende:

Invert-Bohrspülschlämme der hier betroffenen Art enthalten üblicherweise zusammen mit der geschlossenen Ölphase die feindisperse wäßrige Phase in Mengen von etwa 5 bis 45 Gew.-% und vorzugsweise in Mengen von etwa 5 bis 25 Gew.-%. Dem Bereich von etwa 10 bis 25 Gew.-% an disperser wäßriger Phase kann besondere Bedeutung zukommen.

Für die Rheologie bevorzugter Invert-Bohrspülungen im Sinne der Erfindung gelten die folgenden rheologischen Daten: Plastische Viskosität (PV) im Bereich von etwa 10 bis 60 mPas, bevorzugt von etwa 15 bis 40 mPas, Fließgrenze (Yield Point YP) im Bereich von etwa 25 bis 201 kg/100 m$^2$ (5 bis 40 lb/100 ft$^2$) bevorzugt von etwa 50 bis 125,8 kg/m$^2$ (10 bis 25 lb/100 ft$^2$) - jeweils bestimmt bei 50 °C. Für die Bestimmung dieser Parameter, für die dabei eingesetzten Meßmethoden sowie für die im übrigen übliche Zusammensetzung der hier beschriebenen Invert-Bohrspülungen gelten im einzelnen die Angaben des Standes der Technik, die eingangs zitiert wurden und ausführlich beispielsweise beschrieben sind in dem Handbuch "Manual Of Drilling Fluids Technology" der Firma NL-Baroid, London, GB, dort insbesondere unter Kapitel "Mud Testing - Tools and Techniques" sowie "Oil Mud Technology", das der interessierten Fachwelt frei zugänglich ist. Zusammenfassend kann hier zum Zwecke der Vervollständigung der Erfindungsoffenbarung das folgende gesagt werden:

Für die Praxis brauchbare Emulgatoren sind Systeme, die zur Ausbildung der geforderten W/O-Emulsionen geeignet sind. In Betracht kommen insbesondere ausgewählte oleophile Fettsäuresalze, beispielsweise solche auf Basis von Amidoaminverbindungen. Beispiele hierfür werden in der bereits zitierten US-PS 4,374,737 und der dort zitierten Literatur beschrieben. Ein besonders geeigneter Emulgatortyp ist das von der Firma NL Baroid unter dem Handelsnamen "EZ-mul" vertriebene Produkt.

Emulgatoren der hier betroffenen Art werden im Handel als hochkonzentrierte Wirkstoffaufbereitungen vertrieben und können beispielsweise in Mengen von etwa 2,5 bis 5 Gew.-%, insbesondere in Mengen von etwa 3 bis 4 Gew.-% - jeweils bezogen auf Ölphase - Verwendung finden.

Als fluid-loss-Additiv und damit insbesondere zur Ausbildung einer dichten Belegung der Bohrwandungen mit einem weitgehend flüssigkeitsundurchlässigen Film wird in der Praxis insbesondere hydrophobierter Lignit eingesetzt. Geeignete Mengen liegen beispielsweise im Bereich von etwa 6,8 bis 9,1 kg/bbl (15 bis 20 lb/bbl) oder im Bereich von etwa 5 bis 7 Gew.-% - bezogen auf die Ölphase.

In Bohrspülungen der hier betroffenen Art ist der üblicherweise eingesetzte Viskositätsbildner ein kationisch modifizierter feinteiliger Bentonit, der insbesondere in Mengen von etwa 3,6 bis 4,5 kg/bbl (8 bis 10 lb/bbl) oder im Bereich von etwa 2 bis 4 Gew.-%, bezogen auf Ölphase, verwendet werden kann. Das in der einschlägigen Praxis üblicherweise eingesetzte Beschwerungsmittel zur Einstellung des erforderlichen Druckausgleiches ist Baryt, dessen Zusatzmengen den jeweils zu erwartenden Bedingungen der Bohrung angepaßt wird. Es ist beispielsweise möglich, durch Zusatz von Baryt das spezifische Gewicht der Bohrspülung auf Werte im Bereich bis etwa 2,5 und vorzugsweise im Bereich von etwa 1,3 bis 1,6 zu erhöhen.

Die disperse wäßrige Phase wird in Invert-Bohrspülungen der hier betroffenen Art mit löslichen Salzen beladen. Überwiegend kommt hier Calciumchlorid und/oder Kaliumchlorid zum Einsatz, wobei die Sättigung der wäßrigen Phase bei Raumtemperatur mit dem löslichen Salz bevorzugt ist.

Die zuvor erwähnten Emulgatoren bzw. Emulgatorsysteme dienen gegebenenfalls auch dazu, die Ölbenetzbarkeit der anorganischen Beschwerungsmaterialien zu verbessern. Neben den bereits genannten Aminoamiden sind als weitere Beispiele Alkylbenzolsulfonate sowie Imidazolinverbindungen zu nenen. Zusätzliche Angaben zum einschlägigen Stand der Technik finden sich in den folgenden Literaturstellen: GB 2 158 437, EP 229 912 und DE 32 47 123.

## Beispiele

Beispiel 1

Es wird eine Invert-Spülung mit einem O/W-Verhältnis von 90/10 gemäß der nachfolgenden Rezeptur hergestellt:

239 ml    Dialkylether n-C 8

6 g Gelbildner (Handelsprodukt "Omnigel®")
9 g W/O-Emulgator ("EZ-mul NT®" der Fa. NL Baroid)
20 g organophiler Lignit ("Duratone®" der Fa. NL Baroid)
28 g Wasser
12 g $CaCl_2 \times 2\,H_2O$
4 g Kalk
255 g Baryt

Zunächst wird an der Invert-Bohrspülung durch Viskositätsmessung bei 50 °C am ungealterten Material die Plastische Viskosität (PV), die Fließgrenze (YP) sowie die Gelstärke nach 10 Sekunden und nach 10 Minuten bestimmt.

Anschließend wird die Invert-Bohrspülung 16 Stunden bei 125 °C im Autoklaven im sogenannten "Rolleroven" gealtert, um den Temperatureinfluß auf die Emulsionsstabilität zu überprüfen. Danach werden erneut die Viskositätswerte bei 50 °C bestimmt.

Die am ungealterten und am gealterten Material ermittelten Werte sind die folgenden:

| | ungealtertes Material | gealtertes Material |
|---|---|---|
| Plastische Viskosität (PV) | 19 | 21 |
| Fließgrenze (YP) | 11 | 8 |
| Gelstärke ($kg/100\ m^2$) (($lb/100\ ft^2$)) | | |
| 10 sec. | 20,1(4) | 20,1(4) |
| 10 min. | 25,2(5) | 25,2(5) |

HTHP fluid-loss-Wert nach Alterung 4 ml

Beispiel 2

Es wird eine Invert-Bohrspülung bei einem O/W-Verhältnis von 80/20 gemäß der folgenden Rezeptur hergestellt:

210 ml Dialkylether gemäß Beispiel 1
6 g Gelbildner (Handelsprodukt "Omnigel®")
13 g organophiler Lignit ("Duratone®" der Fa. NL Baroid)
48,2 g Wasser
20 g $CaCl_2 \times 2\,H_2O$
8 g W/O-Emulgator ("EZ-mul NT®" der Fa. NL Baroid)
2 g Kalk
220 g Baryt

Die an der ungealterten und gealterten Bohrspülung gemessenen Viskositätswerte sind die folgenden:

| | ungealtertes Material | gealtertes Material |
|---|---|---|
| Plastische Viskosität (PV) | 26 | 25 |
| Fließgrenze (YP) | 16 | 9 |
| Gelstärke ($kg/100\ m^2$) (($lb/100\ ft^2$)) | | |
| 10 sec. | 35,2(7) | 20,1(4) |
| 10 min. | 45,3(9) | 30,2(6) |

HTHP fluid-loss-Wert der gealterten Spülung 1 ml

Beispiele 3 bis 5

In den nachfolgenden Beispielen werden jeweils Invert-Bohrspülungen bei einem O/W-Verhältnis von 90/10 gemäß der folgenden Rezeptur hergestellt:

| | |
|---|---|
| 230 ml | Ether (siehe die nachfolgende Identifizierung in den Beispielen 3 bis 5) |
| 26 ml | Wasser |
| 6 g | Gelbildner (Handelsprodukt "Geltone®") |
| 12 g | organophiler Lignit ("Duratone®" der Fa. NL Baroid) |
| 2 g | Kalk |
| 6 g | W/O-Emulgator ("EZ-mul NT®" der Fa. NL Baroid) |
| 346 g | Baryt |
| 9,2 g | $CaCl_2$ x 2 $H_2O$ |

Im einzelnen kommen die folgenden Ether als Ölphase zum Einsatz:

Beispiel 3: $C_8$-O-$C_8$

Beispiel 4: $C_{10}$-O-$C_{10}$

Beispiel 5: Di-Isotridecylether

Die an der ungealterten und der gealterten Bohrspülung gemessenen Viskositätswerte sind nachfolgend zusammengefaßt. Dabei wird die Alterung einmal nach 16 Stunden bei 125 °C und in einem weiteren Test nach 72 Stunden bei 125 °C bestimmt.

Beispiel 3

| | ungealtertes Material | gealtertes Material 16 Std./ 125 $^{\circ}$C | gealtertes Material 72 Std./ 125 $^{\circ}$ |
|---|---|---|---|
| Plastische Viskosität (PV) | 21 | 24 | 29 |
| Fließgrenze (YP) | 10 | 7 | 6 |
| Gelstärke (kg/100 $m^2$) ((1b/100 $ft^2$)) | | | |
| 10 sec. | 20,1(4) | 15,1(3) | 20,1(4) |
| 10 min. | 30,2(6) | 25,2(5) | 30,2(6) |

Beispiel 4

Die Versuchsansätze dieses Beispiels werden in der folgenden Weise zusätzlich abgewandelt: Für die Alterung über den Zeitraum von 72 Stunden wird eine Bohrspülung der angegebenen Rezeptur eingesetzt, der zusätzlich 2 g eines ausgeprägt oleophilen Amins (Handelsprodukt "Araphen G2D" der Anmelderin) zugegeben worden war. Es werden die nachfolgenden Werte bestimmt:

EP 0 391 251 B1

| | ungealtertes Material | gealtertes Material 16 Std./ 125 $^\circ$C | gealtertes Material 72 Std./ 125 $^\circ$ |
|---|---|---|---|
| Plastische Viskosität (PV) | 34 | 39 | 36 |
| Fließgrenze (YP) | 9 | 22 | 16 |
| Gelstärke $(kg/100\ m^2)$ $((lb/100\ ft^2))$ | | | |
| 10 sec. | 30,2(6) | 50,3(10) | 35,2(7) |
| 10 min. | 40,3(8) | 85,6(17) | 40,3(8) |

Beispiel 5

| | ungealtertes Material | gealtertes Material 16 Std./ 125 $^\circ$C | gealtertes Material 72 Std./ 125 $^\circ$ |
|---|---|---|---|
| Plastische Viskosität (PV) | 63 | 64 | 63 |
| Fließgrenze (YP) | 18 | 17 | 16 |
| Gelstärke $(kg/100\ m^2)$ $((lb/100\ ft^2))$ | | | |
| 10 sec. | 40,3(8) | 30,2(6) | 30,2(6) |
| 10 min. | 55,4(11) | 45,3(9) | 45,3(9) |

**Patentansprüche**

1. Verwendung von wasserunlöslichen und Flammpunkte oberhalb 80 °C aufweisenden Ethern einwertiger Alkohole natürlichen und/oder synthetischen Ursprungs mit wenigstens in C-Atomen, vorzugsweise wenigstens 6 C-Atomen in den Alkoholresten als Ölphase oder Bestandteil der Ölphase von Invert-Bohrspülungen, die als W/O-Emulsionen vorliegen, in der geschlossenen und im Temperaturbereich von 0 bis 5 °C fließ- und pumpfähigen Ölphase eine disperse wäßrige Phase sowie gewünschtenfalls weitere übliche Zusastzstoffe aufweisen und für die umweltschonende Erschließung von beispielsweise Erdöl- bzw. Erdgasvorkommen geeignet sind.

2. Ausführungsform nach Anspruch 1, dadurch gekennzeichnet, daß als Ölphase Ether der angegebenen Art oder deren Abmischungen mit ökologisch verträglichen Komponenten (non-polluting oils) verwendet werden, die im Temperaturbereich von 0 bis 5°C eine Brookfield(RVT)-Viskosität nicht oberhalb 50 mPas, vorzugsweise nicht oberhalb 40 mPas und höchstens von etwa 30 mPas aufweisen.

11

3. Ausführungsform nach Ansprüchen 1 und 2, dadurch gekennzeichnet, daß zur Abmischung mit den wasserunlöslichen Ethern als ökologisch verträgliche wasserunlösliche Öle wenigstens anteilsweise Esteröle verwendet werden, die im Temperaturbereich von 0 bis 5 °C fließ- und pumpfähig sind.

4. Ausführungsform nach Ansprüchen 1 bis 3, dadurch gekennzeichnet, daß als fließ- und pumpfähige Mischungskomponente Esteröle verwendet werden, deren Ester-bildende Alkoholkomponenten sich von mono- und/oder difunktionellen Alkoholen ableiten und dabei vorzugsweise so ausgewählt sind, daß auch im praktischen Einsatz unter partieller Esterverseifung keine toxikologischen, insbesondere keine inhalations-toxikologischen Gefährdungen ausgelöst werden.

5. Ausführungsform nach Ansprüchen 1 bis 4, dadurch gekennzeichnet, daß die im Bohrschlamm eingesetzten Ether und vorzugsweise auch die gegebenenfalls damit in Mischung vorliegende Esteröle Erstarrungswerte (Fließ- und Stockpunkt) unterhalb 0 °C, vorzugsweise unterhalb - 5 °C und insbesondere unterhalb - 10 °C und dabei Flammpunkte nicht unter 90 °C, vorzugsweise oberhalb 100 °C aufweisen.

6. Ausführungsform nach Ansprüchen 1 bis 5, dadurch gekennzeichnet, daß Ether, Mischether und/oder Ethergemische von monofunktionellen Alkoholen mit bis zu 24 C-Atomen, die auch wenigstens anteilsweise olefinisch ungesättigt sein können, verwendet werden.

7. Ausführungsform nach Ansprüchen 1 bis 6, dadurch gekennzeichnet, daß Ether, Mischether und/oder Ethergemische von Alkoholen mit 8 bis 18 C-Atomen, die geradkettig und/oder verzweigt sein können, verwendet werden.

8. Ausführungsform nach Ansprüchen 1 bis 7, dadurch gekennzeichnet, daß die Ether einen wenigstens substantiellen Anteil der geschlossenen Ölphase ausmachen und dabei diese zu mehr als 10 Gew.-%, vorzugsweise zu mehr als etwa 35 Gew.-% bilden oder aber als Additiv der geschlossenen Ölphase in Mengen von etwa 0,1 bis 10 Gew.-% zugesetzt sind.

9. Ausführungsform nach Ansprüchen 1 bis 8, dadurch gekennzeichnet, daß als wenigstens weitgehend wasserunlösliche Esteröle eine oder mehrere der folgenden Komponenten verwendet werden:
   - Ester aus $C_{1-5}$-Monocarbonsäuren und ein- und/oder mehrfunktionellen Alkoholen,
   - Ester aus Monocarbonsäuren synthetischen und/oder natürlichen Ursprungs mit 6 bis 11 C-Atomen und ein- und/oder mehrfunktionellen Alkoholen,
   - Ester aus aliphatisch gesättigten Monocarbonsäuren mit 12 bis 16 C-Atomen und monofunktionellen Alkoholen mit 6 bis 12 C-Atomen,
   - Ester aus olefinisch ein- und/oder mehrfach ungesättigten Carbonsäuren mit 16 bis 24 C-Atomen und monofunktionellen Alkoholen mit 6 bis 12 C-Atomen.

10. Ausführungsform nach Ansprüchen 1 bis 9, dadurch gekennzeichnet, daß die Ether in der Ölphase zur Verbesserung der Rheologie, der Schmierfähigkeit und/oder der fluid-loss-Eigenschaften eingesetzt werden.

11. Ausführungsform nach Ansprüchen 1 bis 10, dadurch gekennzeichnet, daß die etherhaltigen Bohrspülungen zusammen mit üblichen Alkalireserven, insbesondere mit Kalk, zum Einsatz kommen.

12. Ausführungsform nach Ansprüchen 1 bis 11, dadurch gekennzeichnet, daß bei Mitverwendung von Esterölen insbesondere auf Basis von Monocarbonsäuren mit wenigstens 6 C-Atomen basische Aminverbindungen ausgeprägt oleophiler Natur zugegeben werden, die auch mit Hydroxylgruppen substituiert sein können.

13. Ausführungsform nach Ansprüchen 1 bis 12, dadurch gekennzeichnet, daß beim Einsatz von Esterölen auf Basis von Carbonsäuren mit wenigstens 6 C-Atomen ein eventueller Kalkzusatz auf maximal etwa 0,906 kg/bbl (2 lb/bbl) Bohrspülung begrenzt wird.

14. Ausführungsform nach Ansprüchen 1 bis 13, dadurch gekennzeichnet, daß die Ether in Bohrspülungen zum Einsatz kommen, die als W/O-Invertemulsion die feindisperse wäßrige Phase in Mengen von etwa 5 bis 45 Gew.-%, vorzugsweise von etwa 5 bis 25 Gew.-% enthalten.

15. Invert-Bohrspülungen, die für eine umweltfreundliche Erschließung von Erdöl- bzw. Erdgasvorkommen geeignet sind und in einer geschlossenen Ölphase eine disperse wäßrige Phase zusammen mit üblichen weiteren Hilfsstoffen, beispielsweise Emulgatoren, Beschwerungsmitteln, fluid-loss-Additiven und Alkalireserven enthalten, dadurch gekennzeichnet, daß sie als geschlossene Ölphase oder gelöst in ökologisch verträglichen wasserunlöslichen Ölen einen Zusatz von wenigstens weitgehend wasserunlöslichen Ethern einwertiger Alkohole enthalten, wobei die jeweilige Ölphase im Temperaturbereich von 0 bis 5 °C fließ- und pumpfähig ist und Flammpunkte oberhalb 80 °C aufweist.

16. Invert-Bohrspülung nach Anspruch 15, dadurch gekennzeichnet, daß sie als ökologisch verträgliche Öle wenigstens anteilsweise Esteröle insbesondere aus Monocarbonsäuren und ein- und/oder zweifunktionellen Alkoholen enthält.

17. Invert-Bohrspülung nach Ansprüchen 15 und 26, dadurch gekennzeichnet, daß sie eine Plastische Viskosität (PV) im Bereich von etwa 10 bis 60 mPas und eine Fließgrenze (Yield Point YP) im Bereich von etwa 25,2 bis 201,3 kg/100 m² (5 bis 40 lb/100 ft²) - jeweils bestimmt bei 50 °C - aufweist.

18. Invert-Bohrspülung nach Ansprüchen 15 bis 17, dadurch gekennzeichnet, daß bei der Mitverwendung von ökologisch verträglichen Ölen in der geschlossenen Ölphase Esteröle wenigstens etwa ein Drittel, vorzugsweise den überwiegenden Anteil dieser ökologisch verträglichen Öle ausmachen.

19. Invert-Bohrspülung nach Ansprüchen 15 bis 18, dadurch gekennzeichnet, daß ihr disperser Wasseranteil etwa 5 bis 45 Gew.-%, bevorzugt etwa 10 bis 25 Gew.-% ausmacht und insbesondere Salze von der Art $CaCl_2$ und/oder KCl gelöst enthält.

20. Invert-Bohrspülung nach Ansprüchen 15 bis 19, dadurch gekennzeichnet, daß die Ölphase des Invert-Schlamms im Temperaturbereich von 0 bis 5 °C eine Brookfield(RVT)-Viskosität unterhalb 50 mPas, vorzugsweise nicht über 40 mPas aufweist.

## Claims

1. The use of water-insoluble ethers of monohydric alcohols of natural and/or synthetic origin containing at least 4 C atoms and preferably at least 6 C atoms in the alcohol radicals and having flash points above 80°C as the oil phase or as part of the oil phase of invert drilling muds which are present in the form of w/o emulsions, which contain a disperse aqueous phase and, if desired, other typical additives in the continuous oil phase flowable and pumpable at temperatures of 0 to 5°C and which are suitable for the environmentally friendly development of, for example, oil and natural gas occurrences.

2. The use claimed in claim 1, characterized in that ethers of the type mentioned or mixtures thereof with ecologically safe components (non-polluting oils) which have a Brookfield RVT viscosity of not more than 50 mPas, preferably not more than 40 mPas and at most about 30 mPas at temperatures of 0 to 5°C are used as the oil phase.

3. The use claimed in claims 1 and 2, characterized in that ester oils which are flowable and pumpable at temperatures of 0 to 5°C are at least partly used as ecologically safe water-insoluble oils for mixing with the water-insoluble ethers.

4. The use claimed in claims 1 to 3, characterized in that the flowable and pumpable mixture component is selected from ester oils of which the ester-forming alcohol components are derived from mono- and/or difunctional alcohols and which are preferably selected so that, even in practical application, no toxicological and particularly inhalation-toxicological damage is caused by partial ester saponification.

5. The use claimed in claims 1 to 4, characterized in that the ethers used in the drilling mud and preferably the ester oils optionally present in admixture therewith have solidification points (flow point or pour point) below 0°C, preferably below -5°C and more particularly below -10°C and flash points no lower than 90°C and preferably above 100°C.

6. The use claimed in claims 1 to 5, characterized in that ethers, mixed ethers and/or ether mixtures of monofunctional alcohols containing up to 24 C atoms, which may even be at least partly olefinically unsaturated, are used.

7. The use claimed in claims 1 to 6, characterized in that ethers, mixed ethers and/or ether mixtures of linear and/or branched alcohols containing 8 to 18 C atoms are used.

8. The use claimed in claims 1 to 7, characterized in that the ethers make up at least a substantial part of the continuous oil phase, forming more than 10% by weight and preferably more than about 35% by weight thereof, or are added as an additive to the continuous oil phase in quantities of about 0.1 to 10% by weight.

9. The use claimed in claims 1 to 8, characterized in that one or more of the following components are used as the at least substantially water-insoluble ester oils:
    - esters of $C_{1-5}$ monocarboxylic acids and mono- and/or polyhydric alcohols,
    - esters of monocarboxylic acids of synthetic and/or natural origin containing 6 to 11 C atoms and mono- and/or polyhydric alcohols,
    - esters of aliphatically saturated monocarboxylic acids containing 12 to 16 C atoms and monofunctional alcohols containing 6 to 12 C atoms,
    - esters of olefinically mono- and/or polyunsaturated carboxylic acids containing 16 to 24 C atoms and monofunctional alcohols containing 6 to 12 carbon atoms.

10. The use claimed in claims 1 to 9, characterized in that the ethers are used in the oil phase to improve its rheology, lubricity and/or fluid-loss properties.

11. The use claimed in claims 1 to 10, characterized in that the ether-containing drilling muds are used together with typical alkali reserves, more particularly lime.

12. The use claimed in claims 1 to 11, characterized in that, where ester oils based in particular on monocarboxylic acids containing at least 6 C atoms are used, basic amine compounds having a pronounced oleophilic character, which may even be substituted by hydroxyl groups, are added.

13. The use claimed in claims 1 to 12, characterized in that, where ester oils based on carboxylic acids containing at least 6 C atoms are used, a possible addition of lime is limited to at most 0,906 kg/bbl (approx. 2 lb/bbl) drilling mud.

14. The use claimed in claims 1 to 13, characterized in that the ethers are used in drilling muds which contain the finely disperse aqueous phase in quantities of about 5 to 45% by weight and preferably in quantities of about 5 to 25% by weight as the w/o invert emulsion.

15. Invert drilling muds which are suitable for the environmentally friendly development of oil and natural gas occurrences and which contain a disperse aqueous phase together with typical other auxiliaries, for example emulsifiers, weighting agents, fluid-loss additives and alkali reserves, characterized in that they contain an addition of at least substantially water-insoluble ethers of monohydric alcohols as the continuous oil phase or in solution in ecologically safe water-insoluble oils, the particular oil phase being flowable and pumpable at temperatures of 0 to 5°C and having flash points above 80°C.

16. An invert drilling mud as claimed in claim 15, characterized in that it at least partly contains ester oils, more particularly of monocarboxylic acids and mono- and/or dihydric alcohols, as ecologically safe oils.

17. An invert drilling mud as claimed in claims 15 and 26, characterized in that they have a plastic viscosity (PV) of about 10 to 60 mPas and a yield point (YP) of 25.2 to 201.3 kg/100 m$^2$ (5 to 40 lb/100 ft$^2$), as measured at 50°C.

18. An invert drilling mud as claimed in claims 15 to 17, characterized in that, where ecologically safe oils are used in the continuous oil phase, ester oils make up at least about one third and preferably the predominant part of these ecologically safe oils.

19. An invert drilling mud as claimed in claims 15 to 18, characterized in that it has a disperse water content of about 5 to 45% by weight and preferably of about 10 to 25% by weight and, in particular, contains dissolved salts of the $CaCl_2$ and/or KCl type.

20. An invert drilling mud as claimed in claims 15 to 19, characterized in that the oil phase of the invert mud has a Brookfield (RVT) viscosity below 50 mPas and preferably no higher than 40 mPas at temperatures of 0 to 5°C.

## Revendications

1. Utilisation d'éthers insolubles dans l'eau et présentant un point de flamme supérieur à 80°C provenant d'alcools univalents d'origine naturelle et/ou synthétique ayant au moins 4 atomes de carbone et de préférence au moins 6 atomes de carbone dans le radical alcool, comme phase huileuse ou comme constituant de la phase huileuse des liquides de forage inversés qui se présentent sous forme d'émulsions eau/huile dans lesquelles la phase huileuse continue et fluide et pompable dans l'intervalle de température de 0 à 5°C contient une phase aqueuse dispersée ainsi que, éventuellement, d'autres additifs usuels et qui conviennent pour l'exploitation respectant l'environnement, par exemple, de gisements de pétrole ou de gaz naturel.

2. Mode de réalisation selon la revendication 1, caractérisé en ce que l'on utilise comme phase huileuse des éthers du type indiqué ou leurs mélanges avec des constituants écologiquement compatibles (non polluting oils) qui présentent, dans l'intervalle de température de 0 à 5°C, une viscosité Brookfield (RVT) non supérieure à 50 mPas et de préférence non supérieure à 40 mPas et égale au maximum à environ 30 mPas.

3. Mode de réalisation selon les revendications 1 et 2, caractérisé en ce que l'on utilise en mélange avec les éthers insolubles dans l'eau et comme huiles insolubles dans l'eau écologiquement compatibles au moins partiellement, des huiles d'esters qui sont fluides et pompables dans l'intervalle de température de 0 à 5°C.

4. Mode de réalisation selon les revendications 1 à 3, caractérisé en ce que l'on utilise comme constituants de mélanges fluides et pompables des huiles d'esters dont les constituants alcool formant les esters proviennent d'alcools mono- et/ou bifonctionnels et sont alors choisis de préférence de façon à ce que, en cas de saponification partielle des esters pendant l'utilisation pratique, il ne se produise aucun risque toxicologique et en particulier aucun risque toxicologique d'inhalation.

5. Mode de réalisation selon les revendications 1 à 4, caractérisé en ce que les éthers utilisés dans la boue de forage et de préférence également les huiles d'esters présentes éventuellement en mélanges possèdent des points de solidification (points de fluidisation et de congélation) inférieurs à 0°C et de préférence inférieurs à -5°C et plus particulièrement encore inférieurs à -10°C, avec des points de flamme non inférieurs à 90°C et de préférence supérieurs à 100°C.

6. Mode de réalisation selon les revendications 1 à 5, caractérisé en ce que que l'on utilise des éthers, des éthers mixtes et/ou des mélanges d'éthers provenant d'alcools monofonctionnels ayant jusqu'à 24 atomes de carbone qui peuvent être, au moins partiellement, à insaturation oléfinique.

7. Mode de réalisation selon les revendications 1 à 6, caractérisé en ce que que l'on utilise des éthers, des éthers mixtes et/ou des mélanges d'éthers provenant d'alcools ayant de 8 à 18 atomes de carbone qui peuvent être à chaîne linéaire et/ou ramifiée.

8. Mode de réalisation selon les revendications 1 à 7, caractérisé en ce que les éthers constituent une fraction au moins importante de la phase huileuse continue et forment donc celle-ci à raison de plus de 10% en poids et de préférence de plus d'environ 35% en poids ou sont ajoutés comme additifs à la phase huileuse continue en quantités allant d'environ 0,1 à 10% en poids.

9. Mode de réalisation selon les revendications 1 à 8, caractérisé en ce que l'on utilise comme huiles d'esters insolubles dans l'eau, du moins dans une large mesure, un ou plusieurs des constituants suivants :
   - Ester provenant d'acides monocarboxyliques en $C_{1-5}$ et d'alcools uni- et/ou multifonctionnels,
   - Ester provenant d'acides monocarboxyliques d'origine synthétique et/ou naturelle ayant de 6 à 11 atomes de carbone et d'alcools uni- et/ou multifonctionnels,
   - Ester provenant d'acides monocarboxyliques à saturation aliphatique ayant de 12 à 16 atomes de carbone et d'alcools monofonctionnels ayant de 6 à 12 atomes de carbone,
   - Ester provenant d'acides carboxyliques à insaturation oléfinique simples et/ou multiples ayant de 16 à 24 atomes de carbone et d'alcools monofonctionnels ayant de 6 à 12 atomes de carbone.

10. Mode de réalisation selon les revendications 1 à 9, caractérisé en ce que les éthers sont utilisés dans la phase huileuse pour améliorer la rhéologie, la lubrification et/ou les caractéristiques fluid-loss.

11. Mode de réalisation selon les revendications 1 à 10, caractérisé en ce que les liquides de forage contenant des éthers sont utilisés avec les réserves d'alcalis usuelles et en particulier avec de la chaux.

12. Mode de réalisation selon les revendications 1 à 11, caractérisé en ce que, en cas d'utilisation conjointe d'huiles d'esters en particulier à base d'acides monocarboxyliques ayant au moins 6 atomes de carbone, on y ajoute des composés d'amines basiques de nature oléophilique marquée qui peuvent également être substitués par des groupes hydroxyle.

13. Mode de réalisation selon les revendications 1 à 12, caractérisé en ce que, en cas d'utilisation d'huiles d'esters à base d'acides carboxyliques ayant au moins 6 atomes de carbone, l'addition éventuelle de chaux est limitée à un maximum d'environ 0,906 kg/bbl (2 lb/bbl) dans le liquide de forage.

14. Mode de réalisation selon les revendications 1 à 13, caractérisé en ce que les éthers utilisés dans les liquides de forage contiennent comme émulsions inversées eau/huile la phase aqueuse finement dispersée en quantités d'environ 5 à 45% en poids et de préférence d'environ 5 à 25% en poids.

15. Liquides de forage inversés convenant pour l'exploitation respectant l'environnement des gisements de pétrole ou de gaz naturel et qui contiennent, dans une phase huileuse continue, une phase aqueuse dispersée avec les autres adjuvants usuels, comme par exemple émulsifiants, agents alourdissants, additifs fluid-loss, et réserves d'alcalis, caractérisés en ce qu'ils contiennent, comme phase huileuse continue ou à l'état dissous dans les huiles insolubles dans l'eau et écologiquement compatibles, une addition d'éthers insolubles dans l'eau du moins dans une large mesure provenant d'alcools univalents tandis que la phase huileuse est fluide et pompable dans l'intervalle de température de 0 à 5°C et présente un point de flamme supérieur à 80°C.

16. Liquide de forage inversé selon la revendication 15, caractérisé en ce que l'huile écologiquement compatible contient au moins partiellement des huiles d'esters provenant en particulier d'acides monocarboxyliques et d'alcools uni- et/ou bifonctionnels.

17. Liquide de forage inversé selon les revendications 15 et 16, caractérisé en ce qu'il présente une viscosité plastique (PV) comprise dans la gamme d'environ 10 à 60 mPas et une limite de fluidité (Yield Point YP) comprise dans la gamme de 25,2 à 201,3 kg/100 m$^2$ (5 à 40 lb/100 ft$^2$) - la détermination étant déterminée dans chaque cas à 50°C.

18. Liquide de forage inversé selon les revendications 16 à 17, caractérisé en ce que, en cas d'utilisation conjointe d'huiles écologiquement compatibles, les huiles d'esters constituent au moins un tiers et de préférence la majeure partie de la phase huileuse continue de ces huiles écologiquement compatibles.

19. Liquide de forage inversé selon les revendications 15 à 18, caractérisé en ce que sa teneur en eau dispersée est comprise entre environ 5 et 45% en poids et de préférence entre environ 10 et 25% en poids et contient en particulier des sels à l'état dissous du type $CaCl_2$ et/ou KCl.

20. Liquide de forage inversé selon les revendications 15 à 19, caractérisé en ce que la phase huileuse de la boue inversée présente, dans l'intervalle de température de 0 à 5°C, une viscosité Brookfield - (RVT) inférieure à 50 mPas et de préférence non supérieure à 40 mPas.